# EUROPEAN PATENT SPECIFICATION

(11) **EP 2 857 081 B1**
(45) Date of publication and mention of the grant of the patent: **03.01.2018**
(21) Application number: 14185711.0
(22) Date of filing: 22.09.2014
(51) Int. Cl.: B01D 33/23

(54) **Disc filter**
Scheibenfilter
Filtre à disque

(30) Priority: 30.09.2013 CZ 20130751
(43) Date of publication of application: 08.04.2015
(73) Proprietor: IN - EKO Team s.r.o., 62100 Brno (CZ)
(72) Inventor: Strnad, Josef, 62100 Brno (CZ)
(74) Representative: Musil, Dobroslav

(56) References cited:
- WO-A1-2010/128944
- US-A- 1 538 980
- US-A- 3 283 906

## Description

### Technical field

The invention relates to a disc filter comprising a central tube which is rotatably mounted about its longitudinal axis in the construction of the disc filter, whereby it is coupled with a drive and in its cylindrical body it is provided with a system of through holes arranged at least in one row in the direction of the circumference of the central tube. Between the through holes on the central tube are mounted by one of their ends radial beams which are at their free end provided with a fixing node of filtration elements which are arranged between the radial beams and their cavities are aligned with the through holes in the central tube, where the fixing node comprises an elongated fixing plate for the edge area of a pair of neighbouring filtration elements, whereby the fixing plate is further provided with a through hole, through which passes a fixing unit which has the function of preventing an undesirable disconnection from the free end of the radial beam.

### Background art

Disc filters are advantageous especially because of a favourable relationship between the size of the filter area and the required floor space taken up by the filter. Disc filters are widely known, for example from the patent documents EP 1 596 958, WO 2009/011862 and others.

The principle of disc filters consists in that the fluid to be filtered, such as waste water, flows into the inner space of the central tube and through the holes in the cylindrical body of the central tube to the inner space of the filtration elements which are located in a radial direction along the outer circumference of the central tube and which constitute on this outer circumference at least one filter disc, but usually several filter discs depending on the length of the central tube.

Filtration elements are generally made as sectors of an annulus, whereby with their part having a smaller radius of curvature they are aligned with the central tube and the above-mentioned holes in the cylindrical body of the central tube. The filtration elements are composed of a frame and are on their front side, i.e. on the side made as a rule as a section of an annulus, provided with filter areas, through which the fluid which is being filtered flows to the space outside the filter as filtered fluid.

Filter areas are formed by filter cloths whose fineness, or size of the filter holes in them, is determined by the minimum size of the particles that can be captured by the filter from the fluid being filtered. As follows from the previous description, impurities are captured on the inner side of the filter cloths, i. e. inside the filtration elements, whereby due to the continuous or periodic rotation of the central tube about its longitudinal axis they are carried up, along with the filtration elements, above the level of the fluid being filtered in the central tube. In this position, the impurities that have been captured move either spontaneously or they are transferred with the aid of fluid flow, for example with the aid of spraying by means of high-pressure nozzles having a large spray angle, back to the central tube in which a discharge trough of impurities is located. From the trough the impurities are removed outside the filter for further utilization.

WO 2009/011862 A1 discloses a solution in which a system of circumferential frames with radial arms is attached to the outer surface of the central tube in the area of the through holes for the passage of the fluid to be filtered, by which means on the circumference of the central tube is formed a substantially radial structure which constitutes a frame base for subsequent insertion of the filtration elements shaped as sectors of an annulus. The circumferential frames are provided in the portion adjacent to the central tube with through holes which correspond with the above-mentioned holes in the central tube. For better insertion of the filtration elements, the radial beams of the circumferential frames are provided with grooves into which the filtration elements are always inserted between two neighbouring radial beams. In this case, each filtration element is composed of a pair of filter plates, where one plate constitutes the front filter area of the filtration element, whereas the other filter plate constitutes the rear area of the filtration element. After inserting a pair of filter plates between the individual pairs of neighbouring radial beams of the circumferential frames, a closing beam is attached to the outer end of the neighbouring radial beams. The closing beam fixes the filtration elements in their position and constitutes the outer circumference of a part of the annulus of the filter disc.

This construction is considerably complicated, expensive and demanding in terms of assembly, since it consists of a plurality of separate segments which have to be connected to form a functional whole. If a defect of any of the filter plates occurs, it is necessary to unscrew a row of bolts and release also the other filter plate, which leads to increasing the amount of time needed for maintenance and repair and to a higher risk of losing bolts and tools as they may fall into the lower parts of the filter.

Systems similar to the solution described above according to WO 2009/011862 A1 are known, for example, from the patent documents WO 2010/128944 A1 and DE 60 2004 003 562 T2.

CA 2070341 describes a solution in which radial carrier beams having a profile "H" are disposed radially on the outer circumference of the central tube. The radial carrier beams are attached by one end to the outer surface of the central tube and the side walls having a profile "H" are oriented in the direction of the circumference of the central tube. The filtration elements shaped as sections of an annulus are composed of independent hollow bodies which with their lateral walls, i.e. with the planar parts of a particular annular section, are inserted between the lateral walls of the neighbouring "H" carrier beams. At the free end of each "H" carrier beam is situated a threaded bolt. After inserting the filtration elements between the lateral walls of the neighbouring "H" carrier beams, a flat fixing iron is arranged along the whole length of the outer surface of the filtration elements and afterwards it is attached to the "H" carrier beams by means of bolt connections with bolt nuts and attachment plates.

This construction is demanding in terms of the assembly process, since in case of a defect of any of the filtration elements it is necessary to unscrew a row of nuts including their attachment plates and release the flat fixing iron, which means increasing the amount of time needed for maintenance and repair and a higher risk of losing nuts, attachment plates and tools as they may fall into the lower parts of the filter.

WO 2009/105015 A1 discloses a solution in which the central tube is provided along its circumference with a pair of through holes, each pair being aligned with one filtration element shaped as a section of an annulus. Between each pair of the through holes is mounted by one end a fastening rod which with its middle portion, i.e. on the inside of the filtration element, passes to the outer circumference of the filtration element, where is situated a threaded fastening rod on which a bolt nut is screwed through an attachment plate. By tightening the bolt nut, the filtration element is pressed against the central tube and thus the filtration element on the central tube is secured in the required position.

Although this construction is more simple than the previous solution, in terms of assembly it is similarly demanding, since in case of a defect of any of the filtration elements it is necessary to unscrew a row of bolt nuts with attachment plates and thus release the filtration element, which leads to increasing the amount of time needed for maintenance and repair and also increases the risk of losing bolt nuts, attachment plates and tools, as they may fall into the lower parts of the filter.

US 1,538,980 and US 3,283,906 discloses a disc filter comprising a central tube which is rotatable about its longitudinal axis mounted in the structure of the disc filter and is coupled with a drive. In its cylindrical shell, the central tube is equipped with a system of through holes arranged in at least one row in the circumferential direction of the central tube. On the central tube are between the through holes screwed by its one end radial beams in the form of bars with a circular cross section. At their free end, the bars are provided with a thread. Between the radial beams are arranged filter elements which are associated with their cavities in said through-holes in the central tube. The outer region of a pair of adjacent filter elements is fixed by an elongated fixation plate, which is by its central through-hole mounted at the end of the radial beam and is fixed by a nut threaded at the end thread of the radial beam.

The aim of the invention is to eliminate or at least minimize the disadvantages of the background art, especially to minimize the time needed for repair, while maintaining the simplicity of the construction, as well as to eliminate the risk of losing components and tools during the assembly process due to their falling into the lower parts of the filter.

### Principle of the invention

The goal of the invention is achieved by a disc filter whose principle consists in that the radial beams are composed of flat strips which are oriented with their surface in the direction of the longitudinal axis of the central tube.

Preferred embodiments are included in the dependent patent claims, their advantages being described in greater detail in the corresponding parts of the specific description.

### Description of drawings

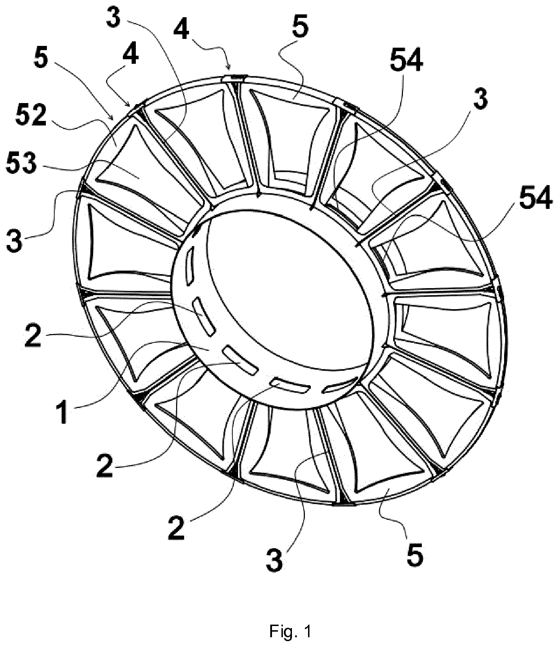

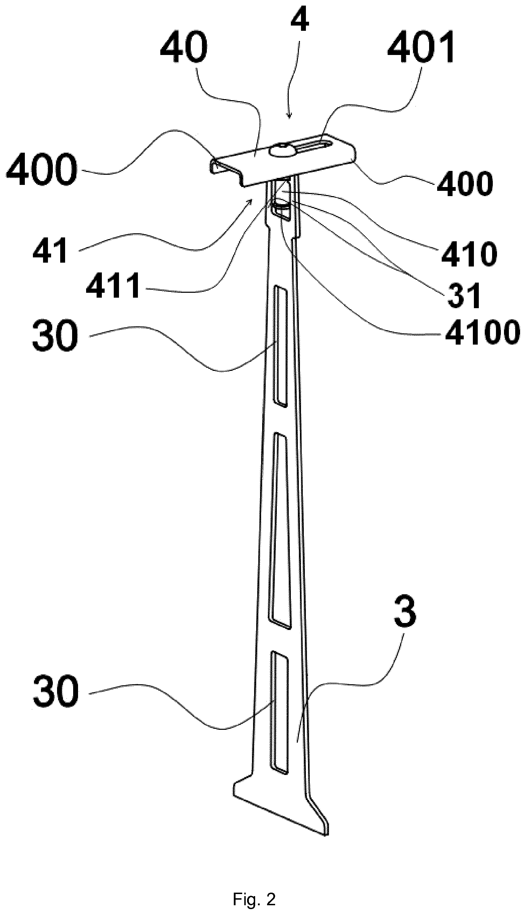

The invention is schematically represented in the drawing, where Fig.1 shows the arrangement of the central tube with radial beams, fixing nodes and filtration elements according to the invention, Fig. 2 represents a detail of the arrangement of the radial beams with fixing nodes on the central tube, Fig. 3 shows a detail of the arrangement of the radial beams with fixing nodes and filtration elements (a view of the outer side), Fig. 4 shows a detail of the arrangement of the radial beams with fixing nodes and filtration elements (a view of the inner side), Fig. 5 is a detail of the arrangement of a system consisting of *a protrusion - a groove* on the pair consisting of *a filtration element - a radial beam* and Fig. 6 shows another detail of the arrangement of the system consisting of *a protrusion - a groove* on the pair consisting of a *filtration element - a radial beam.*

### Specific description

The invention will be described using an example of embodiment of a disc filter which comprises a central tube **1,** which is rotatably mounted about its longitudinal axis in an unillustrated manner in an unillustrated construction of the disc filter. For the purpose of the above-mentioned rotation, the central tube **1** is coupled with a drive in an unillustrated manner. The central tube **1** is in its cylindrical body provided with a system of through holes **2** spaced at regular intervals in at least one row in the direction of the circumference of the central tube **1.** Between the through holes **2** in one row in the direction of the circumference of the central tube **1** are attached to the central tube **1** by one of its ends at regular intervals in the direction of the circumference of the central tube **1** radial beams **3**, which are provided with fixing nodes **4** at their other end. Always between two neighbouring radial beams **3** in one row of through holes **2** in the direction of the circumference of the central tube **1** is arranged one filtration element **5**, shaped as a section of an annulus which is with its narrower end, i.e. the end having a lesser diameter of curvature, aligned with a through hole **2** in the central tube **1**. The filtration element **5** is self-supporting, i.e. it exists as an independent body having a constant shape and dimensions, whereby it is composed of a frame **52** and a pair of filter cloths **53** arranged on the frame **52** and constituting the front and rear areas of the filtration element **5**. The filtration element **5** is at its narrower end provided with a through hole **54** in its frame **52** leading to the inner space of the filtration element **5**, whereby this through hole of the filtration element **5** corresponds with the through hole **2** in the central tube **1**.

The filtration element **5** abuts the radial beams **3** with its lateral walls and each of the fixing nodes **4** acts on the edge area of the outer circumference of two neighbouring filtration elements **5** and pushes them to the central tube **1,** and so one filtration element **5** is on both edge areas of its outer circumference fixed by one fixing knot **4**, i.e. on the whole it is fixed by two fixing nodes **4**, whereby each of the fixing nodes **4** participates in fixing the two filtration elements **5** neighbouring with a corresponding radial beam **3**.

In the illustrated example of embodiment the radial beams **3** are always situated between individual pairs of through holes **2** in one row of through holes **2** in the direction of the circumference of the central tube **1,** and so there is one filtration element **5** assigned to each through hole **2**. In an unillustrated embodiment between the neighbouring radial beams **3** are arranged two or several through holes **2**, and so one filtration element **5** located between two neighbouring radial beams **3** is assigned to this particular number of through holes **2**.

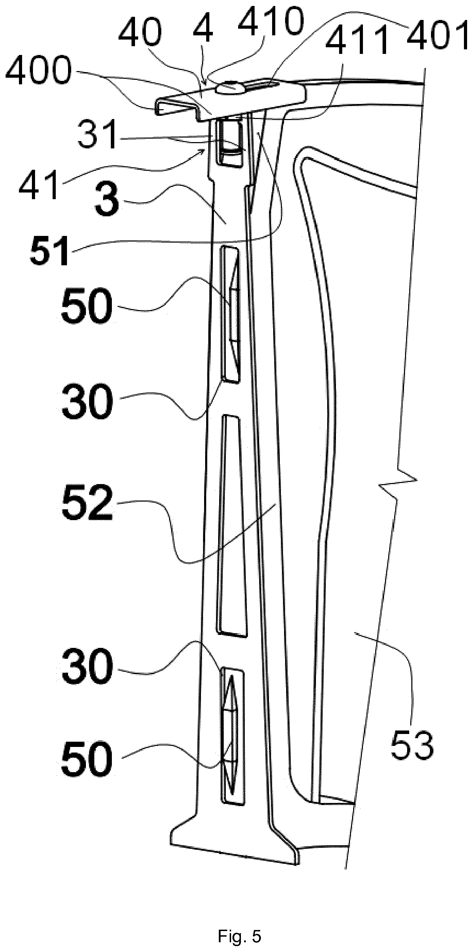

The radial beams **3** are formed by flat strips which are oriented with their surface in the direction of the longitudinal axis of the central tube **1**. So as to improve the stability of the filtration elements **5,** the radial beams **3** are provided in their operating position with a system of through holes **30,** preferably longitudinal holes situated with their longer side in the direction of the length of the radial beams **3**. Protrusions **50** on the lateral walls of the filtration elements **5** fit into the through holes **30** in the radial beams **3**, preferably longitudinal protrusions **50** situated with their longer side in the same manner as the longitudinal through holes **30** in the radial beams **3**, i.e. in the direction of the length of the radial beams **3**, as can be seen in Fig. 5 and 6.

As mentioned above, each radial beam **3** is provided at its free end with one fixing node **4**.

The fixing node **4** comprises an elongated fixing plate **40** with a through hole **401,** in the illustrated example of embodiment a longitudinal through hole **401,** through which passes a fixing unit **41,** which is by conventional means disconnectably mounted in the adjacent free end of the radial beam **3**. The expression "by conventional means disconnectably " should be understood in a sense that it relates at least to exerting conventional strength and using conventional tools used for servicing disc filters, therefore it does not necessarily mean being absolutely disconnectable in the sense of a disconnectable connection, which means that the connection itself can be also detachable, but the operating staff have to exert exceptional effort or has to perform a special operation to achieve the dismantling this connection.

If the through hole is designed **401** as a longitudinal through hole, it is advantageous if the longitudinal through hole **401** on the length of the fixing plate **40** is arranged in such a manner that one of its ends is arranged as a backstop for the fixing unit **41** for delimitation of the operating position of the fixing plate **40,** in which the fixing plate **40** abuts the edge portion of both corresponding filtration elements **5** , while the other end of the longitudinal through hole **401** is situated at one end of the fixing plate **40.** It is necessary to add that the arrangement of the through hole **401** made as a longitudinal through hole **401** enables better handling of the fixing plate **40** not only by turning the fixing plate around the fixing unit **41,** but also by shifting it lengthwise to a position where the fixing plate **40** does not impede manipulation with the filtration elements **5**.

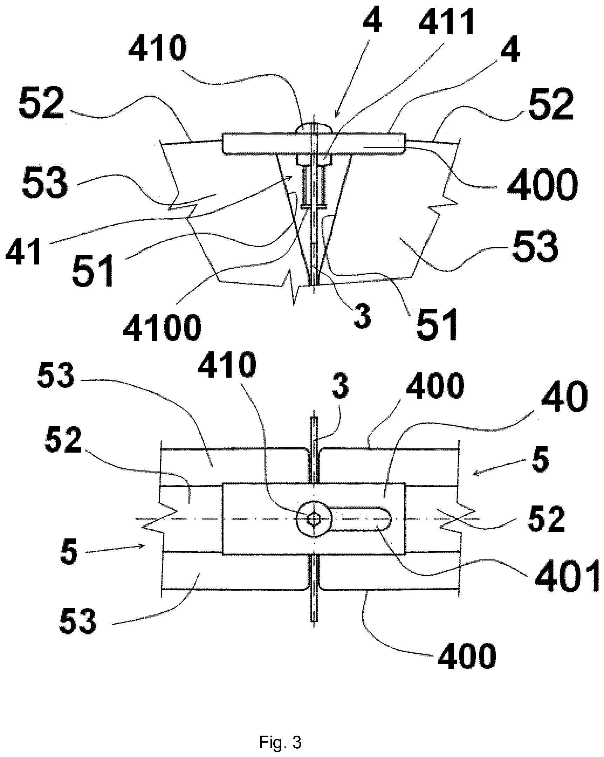

The width of the fixing plate **40** corresponds to the width of the upper portion of the filtration element **5**, namely the portion constituting the outer circumference of the filter disc. The length of the fixing plate **40** is such as to overlap sufficiently - by several centimetres - the edge area of the upper portion of two neighbouring filtration elements **5**, as is apparent, for example, in Fig. 3.

So as to improve the stability of the filtration elements **5** secured by the fixing plates **40** in the direction of the longitudinal axis of the central tube **1,** or, to be exact, in the direction of the plane of the radial beams **3**, the fixing plate **40** is provided with at least one stabilization element. In the illustrated examples of embodiment, the fixing plate **40** is provided with a pair of longitudinal curved lateral walls **400,** between which are arranged edge areas of the outer circumference of a pair of neighbouring filtration elements **5** in a position in which the fixing plate **40** secures the filtration elements **5**. The fixing plate **40** in this embodiment embraces the edge area of the filtration elements **5**, which are secured by it, from three sides. In an unillustrated example of embodiment, the stabilization element of the fixing plate **40** is formed by one longitudinal curved lateral wall **400.** In another unillustrated example of embodiment, the stabilization element of the fixing plate **40** is formed by at least one longitudinal protrusion or rib arranged on the bottom of the fixing plate **40,** i.e. on the side by which the fixing plate **40** abuts the edge area of the outer circumference of a pair of neighbouring filtration elements **5**, i.e. on the outer circumference of the filter disc. In yet another unillustrated example of embodiment, the stabilization element of the fixing plate **40** consists of a combination of at least one curved lateral wall **400** and at least one longitudinal protrusion or rib arranged on the bottom of the fixing plate **40.** In order to achieve further improvement of the stability of the filtration elements **5** in those embodiments in which at least one stabilization element of the fixing plate **40** is composed of an longitudinal protrusion or a rib on the bottom of the fixing plate **40,** at least on the edge area of the outer circumference of the filtration elements **5** is arranged at least one, but ideally a corresponding number of unillustrated corresponding longitudinal grooves or recesses for the longitudinal protrusions or ribs on the bottom of the fixing plate **40** to fit in.

The fixing plate **40** is either made of metals or non-metals. The fixing plate **40** is made, for example, of steel, a non-iron metal or plastic etc.

The fixing plate **41** which, as stated earlier, secures the fixing plate **40** in its positions, comprises in the illustrated example of embodiment a bolt **410,** which is through a through hole **401** in the fixing plate **40** screwed in a bolt nut **411**, which is situated on the bottom of the fixing plate **40,** i.e. on the side turned towards the central tube **1.** The bolt nut **411** is mounted in a fork **31** at the end of the radial beam **3**, whereby the longitudinal axis of the bolt nut **411** is perpendicular to the longitudinal axis of the central tube **1,** or more precisely, it is situated in the direction of the length of the radial beam **3**. The bolt **410** is at its end behind the bolt nut **411,** which is situated between the arms of the fork **31,** provided with a restrictor element **4100,** such as a ring with flexible arms or a crosswise latch, etc., which prevent easy accidental unscrewing of the bolt **410** from the bolt nut **411** and, at the same time, should need arise, enable to deliberately unscrew the bolt **410** relatively simply from the bolt nut **411.** In this manner, prevention is secured as to undesirable loss of individual elements of the fixing node **4** during the assembly process and maintenance, for example when they fall to the lower part of the filter or when they are accidentally totally unscrewed or after being dropped by the service technician etc. In the embodiment of the fixing unit **41** with a bolt **410** it is clear that the head of the bolt **410** is situated on the side of the fixing plate **40** which is turned away from the radial beam **3**. Moreover, it is advantageous if a circular recess for the head of the bolt **410** is made on this side of the fixing plate **40** which is turned away in the point of the head of the bolt **410** abutting the fixing plate **40** in its operating position in which the fixing plate **40** fixes the edge portions of the outer circumference of the two neighbouring filtration elements **5**, in order to achieve better position fixation of the fixing plate **40** after tightening the bolt **410.**

In an unillustrated example of embodiment, the fixing unit **41** comprises a self-locking cam used instead of the bolt **410** described above, whereby the self-locking cam abuts with its working surface the upper surface of the fixing plate **40** and pushes it in its operating retracted position on the edge area of the outer circumference of a pair of neighbouring filtration elements **5** and the filter plate **4** is provided with means preventing undesirable removal from the construction of the filter. Also, this embodiment enables assembly, disassembly and replacement of the filtration elements **5** virtually without tools, since the self-locking cam can be handled directly by the hands of the operator. In another unillustrated example of embodiment, the fixing unit **41** is composed of other suitable elements having the function of protection from undesirable or accidental disconnecting from the free end of the radial beam **3**.

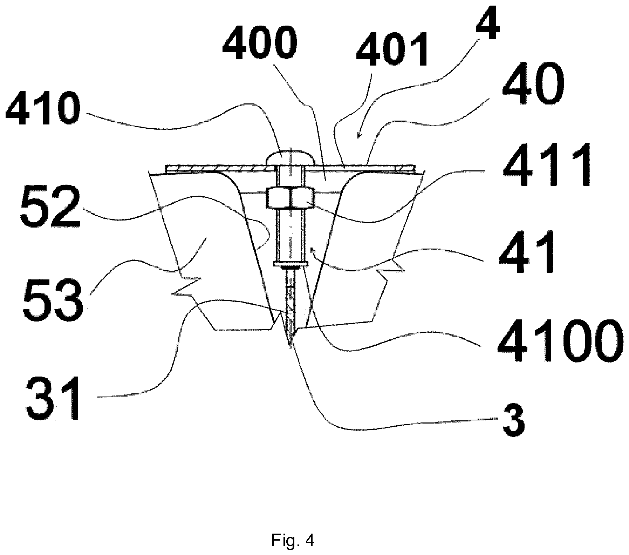

In the illustrated example of embodiment of the fixing unit **41,** in order to improve manipulation with the filtration elements **5** when inserting them into the filter and extracting them from the filter, as well as in order to improve the space ratios of the fixing knot **4,** a free space has been created between the end portions of the lateral walls of the neighbouring filtration elements **5**, for example the space has been created by chamfering **51** the upper ends of the lateral surfaces of the neighbouring filtration elements **5**, as can be seen in Fig. 3 and 4.

## Claims

1. A disc filter comprising a central tube (1) which is mounted rotatably about its longitudinal axis in the construction of the disc filter, whereby the central tube (1) is coupled with a drive and is provided in its cylindrical body with a system of through holes (2) arranged in at least one row in the direction of the circumference of the central tube (1), whereby between the through holes (2) on the central tube (1) are mounted by one of its ends radial beams (3) which are at their free end provided with a fixing node (4) of the filtration elements (5), which are arranged between the radial beams (3) and are aligned with their cavities with the through holes (2) in the central tube (1), where the fixing node (4) comprises an elongated fixing plate (40) for the edge area of a pair of neighbouring filtration elements (5), whereby the fixing plate (40) is further provided with a through hole (401), through which passes a fixing unit (41) which has the function of preventing an undesirable disconnection from the free end of the radial beam (3), **characterized in that** the radial beams (3) are composed of flat strips which are oriented with their surface in the direction of the longitudinal axis of the central tube (1).

2. The disc filter according to Claim 1, **characterized in that** the radial beams (3) are provided with a system of through holes (30) for the protrusions (50) on the lateral walls of the filtration elements (5) to fit in.

3. The disc filter according to Claim 2, **characterized in that** the radial beam (3) is at its end provided with fork (31) in which is mounted a bolt nut (411), in which is screwed a bolt (410), which passes through hole (401) in the fixing plate (40) , whereby the longitudinal axis of the bolt nut (411) is perpendicular to the longitudinal axis of the central tube (1) and the bolt (410) is at its end behind the bolt nut (411) between the arms of the fork (31) provided with a restrictor (4100) of being unscrewed.

4. The disc filter according to Claim 2, **characterized in that** in the direction away from the radial beam (3) and behind the fixing plate (40) is arranged a self-locking cam, which abuts the upper area of the fixing plate (40) with its working surface.

5. The disc filter according to any of Claims 2 to 4, **characterized in that** the filtration elements (5) are provided with chamfering (51) of the upper ends of their lateral surfaces.

6. The disc filter according to any of Claims 3 to 5, **characterized in that** in the fixing plate (40) is arranged a longitudinal through hole (401) which is arranged along the length of the fixing plate (40) in such a manner that one of its ends is arranged as a backstop for the fixing plate (41) for determining the operating position of the fixing plate (40), whereas the other end of the longitudinal through hole (401) is situated at one end of the fixing plate (40).

## Patentansprüche

1. Scheibenfilter, der ein Mittelrohr (1) aufweist, das um seine Längsachse herum in der Konstruktion des Scheibenfilters drehbar gelagert ist, wobei es mit einem Antrieb gekoppelt ist und in seinem walzenförmigen Mantel mit einem System der Durchgangsöffnungen (2) versehen ist, die in mindestens einer Reihe in der Umfangsrichtung des Mittelrohres (1) angeordnet sind, wobei zwischen den Durchgangsöffnungen (2) auf dem Mittelrohr (1) mit einem ihrer Enden Radialstrahlen (3) gelagert sind, die an ihrem freien Ende mit einem Fixationsknoten (4) der Filterelemente (5) versehen sind, die zwischen den Radialstrahlen (3) angeordnet sind, und die mit ihren Hohlräumen den genannten Durchgangsöffnungen (2) im Mittelrohr (1) zugeordnet sind, wo der Fixationsknoten (4) eine längliche Fixationsplatte (40) für den Randbereich des Paares von benachbarten Filterelementen aufweist, wobei die Fixationsplatte (40) weiter eine Durchgangsöffnung (401) aufweist, durch die eine Fixationseinheit (41) geht, die mit einer Schutzfunktion gegen eine unerwünschte Abkopplung vom freien Ende des Radialstrahles (3) gebildet ist, **dadurch gekennzeichnet, dass** die Radialstrahlen (3) durch flache Bänder gebildet werden, die mit ihrer Fläche in der Richtung der Längsachse des Mittelrohres (1) situiert sind.

2. Scheibenfilter nach dem Anspruch 1, **dadurch gekennzeichnet, dass** die Radialstrahlen (3) ein System von Durchgangsöffnungen (30) aufweisen, in die die Vorsprünge (50) auf den Seiten der Filterelemente (5) einrasten.

3. Scheibenfilter nach dem Anspruch 2, **dadurch gekennzeichnet, dass** der Radialstrahl (3) an seinem Ende mit einer Gabel (31) versehen ist, in der eine Schraubenmutter (411) gelagert ist, in der die Schraube (410) eingeschraubt ist, die die Öffnung (401) in der Fixationsplatte (40) durchgeht, wobei die Längsachse der Schraubenmutter (411) zur Längsachse des Mittelrohres (1) senkrecht ist und die Schraube (410) an ihrem Ende hinter der Schraubenmutter (411) zwischen den Armen der Gabel (31) einen Begrenzer (4100) von ihrem Herausschrauben aufweist.

4. Scheibenfilter nach dem Anspruch 2, **dadurch gekennzeichnet, dass** in der Richtung von dem Radialstrahl (3) und hinter der Fixationsplatte (40) ein selbsthemmender Exzenter angeordnet ist, der mit seiner Arbeitsfläche auf die obere Fläche der Fixationsplatte (40) aufsitzt.

5. Scheibenfilter nach einem der Ansprüche 2 bis 4, **dadurch gekennzeichnet, dass** die Filterelemente (5) eine Abschrägung (51) von oberen Enden der Seitenflächen aufweisen.

6. Scheibenfilter nach einem der Ansprüche 3 bis 5, **dadurch gekennzeichnet, dass** in der Fixationsplatte (40) ein längliche Durchgangsöffnung (401) angeordnet ist, die entlang der Länge der Fixationsplatte (40) angeordnet ist, also eines seiner Enden dient als Anschlag für Fixationsplatte (40) zur Festlegung der Arbeitslage der Fixationsplatte (40), und das andere Ende der länglichen Durchgangsöffnung (401) an einem Ende der Fixationsplatte (40) liegt.

## Revendications

1. Filtre à disque comprenant le tube central (1) qui est monté d'une manière rotative autour de son axe longitudinal dans la constructin du filtre à disque, tandis qu'il est couplée à l'entraînement et il est pourvue d'un système de trous traversants (2) disposés en au moins une rangée dans la direction circonférentielle du tube central (1), tandis qu'entre les trous traversants (2) sur le tube central (1) sont placés à une de leurs extrémités les rayons radiaux (3) qui sont munis à leur extrémité libre d'un noeud de fixation (4) des éléments filtrants (5) qui sont disposés entre les rayons radiaux (3) et qui sont par leurs cavités affectées aux dits trous traversants (2) au tube central (1) où le noeud de fixation (4) comprend une plaque de fixation allongée (40) pour la région extérieure d'une paire d'éléments filtrants adjacents, tandis que la plaque de fixation (40) est en outre muni d'un trou traversant (401) à travers lequel passe l'unité de fusion (41) est formée avec la fonction de protection contre la déconnexion indésirable de l'extremité libre des rayons radiaux (3) **caractérisé en ce que** les rayons radiaux (3) sont formés par des bandes plates qui sont situées dans la direction de l'axe longitudinal du tube central (1).

2. Filtre à disque selon la revendication 1, **caractérisé en ce que** les rayons radiaux (3) sont munis d'une système de trous traversants (30) dans lesquels les saillies (50) s'engagent sur les côtés des éléments filtrants (5).

3. Filtre à disque selon la revendication 2, **caractérisé en ce que** le rayon radial (3) est muni à son extrémité d'une fourchette (31) dans laquelle est monté un écrou (411) dans lequel est vissé le boulon (410) qui passe à travers l'ouverture (401) dans la plaque de fixation (40), tandis que l'axe longitudinal de l'écrou (411) est perpendiculaire à l'axe longitudinal du tube central (1) et le boulon (410) à son extrémité derrière l'écrou (411) entre les épaules de la fourchette comporte un limiteur (4100) de son dévissagement.

4. Filtre à disque selon la revendication 2, **caractérisé en ce que** dans la direction du rayon radial (3) et au-delà de la plaque de fixation (40) un excentrique autobloquant est disposé, qui vient buter avec sa surface de travail sur la surface supérieure de la plaque de fixation (40).

5. Filtre à disque selon l'une quelconque des revendications 2 à 4, **caractérisé en ce que** les éléments filtrants (5) sont munis d'un chanfrein (51) des extrémités supérieures de leurs surfaces latérales.

6. Filtre à disque selon l'une quelconque des revendications 3 à 5, **caractérisé en ce que** dans la plaque de fixation (40) est disposé le trou traversant longitudinal (401) qui est agencé sur la longueur de la plaque de fixation (40), tandis qu'une de ses extrémités sert pour déterminer la position de travail de la plaque de fixation (40), et l'autre extrémité du trou traversant longitudinal (401) est située à une extrémité de la plaque de fixation (40).
